# EUROPEAN PATENT APPLICATION

(11) **EP 2 490 153 A1**
(43) Date of publication of application: **22.08.2012**
(21) Application number: 12151817.9
(22) Date of filing: 19.01.2012
(51) Int. Cl.: G06K 9/00

(54) **Vein authentication module**

(30) Priority: 25.01.2011 JP 2011012809
(71) Applicant: Hitachi Media Electronics Co., Ltd., Oshu-shi Iwate (JP)
(72) Inventor: Ichige, Kenji, Tokyo, 100-8220 (JP); Takizawa, Hitoshi, Tokyo, 100-8220 (JP); Takahashi, Kyoichi, Tokyo, 100-8220 (JP)
(74) Representative: Moore, Graeme Patrick

(57) **Abstract**

A vein authentication module exhibiting improvement in reduction in size and thickness is provided. A vein authentication module 1 includes: a light source 15 for irradiating an authentication object with light; an image sensor 13 for taking an image of a vein pattern of the authentication object; a reflecting mirror 14 for reflecting the light emitted from the light source 15 and making the reflected light reach the authentication object; and a housing 11 containing the light source 15, the image sensor 13, and the reflecting mirror 14; wherein the image sensor 13 is of an area sensor type and the light source 15 and the reflecting mirror 14 are located within a plane perpendicular to an optical axis N of the image sensor 13 and including the image sensor 13.

## Description

### BACKGROUND

### Technical Field

The present invention relates to a vein authentication module for identifying an individual by using biometrics.

### Related Art

Conventionally, a finger vein authentication module for authenticating or identifying an individual by registering a human's finger vein pattern as biometric information in advance and then executing match processing on a presented finger vein pattern is known. Such a finger vein authentication module generally includes: a light source for irradiating a human's finger with near infrared light; an imaging block for taking images of vein patterns; and an information processing unit for matching a shot vein pattern against a registered finger vein pattern, which was stored in advance, and judging whether or not these patterns are identical to each other. With such a conventional finger vein authentication module, an optical system to make reduced images is used as an optical system for the imaging block.

### (For example, see Patent Literature 1 and 2).

A finger vein authentication module that uses an optical system to make same-size images as the optical system for the imaging block has been introduced. (For example, see Patent Literature 3 to 5).

Furthermore, a finger vein authentication module is introduced, that includes a scanning means for scanning a finger of an authentication subject according to positional changes and a light receiving means for receiving the light reflected in the finger for the scanning range and is capable of personal authentication without having the finger at a fixed authentication position. (For example, see Patent Literature 6).

### [Citation List]

### [Patent Literature]

[Patent Literature 1] Japanese Patent No. 3972779
[Patent Literature 2] Japanese Patent Application Laid-Open (Kokai) Publication No. 2008-212311
[Patent Literature 3] Japanese Patent Application Laid-Open (Kokai) Publication No. 2008-168118
[Patent Literature 4] WO2008/123584
[Patent Literature 5] Japanese Patent Application Laid-Open (Kokai) Publication No. 2009-89727
[Patent Literature 6] WO2008/153123

### SUMMARY

The finger vein authentication module which uses the optical system to make reduced images as the optical system for the imaging block as described in Patent Literature 1 and 2 mentioned above has a permissible range of distortion of the obtained images, so that the distance between the image sensor and the surface of the finger (that is, the optical path length) is required several centimeters or more. Therefore it is difficult to downsize for the type of finger vein authentication module.

Furthermore, a module described in Patent Literature 3 needs to the keep a distance between the finger and the light source, so that it is difficult to reduce the thickness of the module. Moreover, a finger vein authentication module described in Patent Literature 4 is difficult to reduce the thickness of the module because. Furthermore, a finger vein authentication module described in Patent Literature 5 is difficult to reduce the thickness of the module because the light source is located above the imaging device.

The finger vein authentication module described in Patent Literature 6 aims at authenticating an individual without having finger at a fixed authentication position a mirror as a canning means is set so that it can rotate around two axes perpendicular to each other. Therefore, the module is complicated and a space allowing this rotation is required, so that it is difficult to downsize the module. Furthermore, Patent Literature 6 does not disclose about the downsizing of the module.

The present invention was devised in consideration of the above circumstances and it is an object of the invention to provide a vein authentication module exhibiting improvement in reduction in size and thickness.

In order to achieve the above-described object, the present invention preferably provides a vein authentication module including: a light source for irradiating an authentication object with light; an image sensor for taking an image of a vein pattern of the authentication object; a reflecting mirror for reflecting the light emitted from the light source and making the reflected light reach the authentication object; and a housing containing the light source, the image sensor, and the reflecting mirror; wherein the image sensor is of an area sensor type and the light source and the reflecting mirror are located within a plane perpendicular to an optical axis of the image sensor and including the image sensor.

According to the present invention, the light source and the reflecting mirror are located within a plane perpendicular to an optical axis of the image sensor and including the image sensor, thereby making it possible to reduce the volume required to set the image sensor and the light source. As a result, a vein authentication module exhibiting improvement in reduction in size and thickness can be provided.

### BRIEF DESCRIPTION OF THE DRAWINGS

[Fig. 1] Fig. 1 is a plan view of a vein authentication module according to Embodiment 1 of the present invention.
[Fig. 2] Fig. 2 is a cross-sectional view of the vein authentication module as taken along line II-II shown in Fig. 1.
[Fig. 3] Fig. 3 is a block diagram of a processing circuit for the vein authentication module according to Embodiment 1 of the present invention to perform vein authentication.
[Fig. 4] Fig. 4 is an enlarged sectional view of part of a vein authentication module according to another embodiment of the present invention.
[Fig. 5] Fig. 5 is a plan view of a vein authentication module according to another embodiment of the present invention.
[Fig. 6] Fig. 6 is a plan view of a vein authentication module according to Embodiment 2 of the present invention.
[Fig. 7] Fig. 7 is a cross-sectional view of the vein authentication module as taken along line VII-VII shown in Fig. 6.

### DESCRIPTION OF EXEMPLARY EMBODIMENTS

A vein authentication module according to embodiments of the present invention will be explained with reference to the attached drawings. While the embodiments described below are for the purpose of describing this invention, the invention is not limited only to these embodiments. Accordingly, this invention can be utilized in various ways unless the utilizations depart from the gist of the invention.

(Embodiment 1)

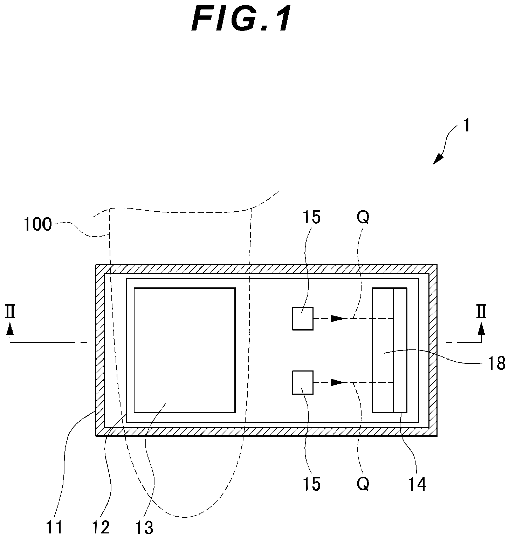

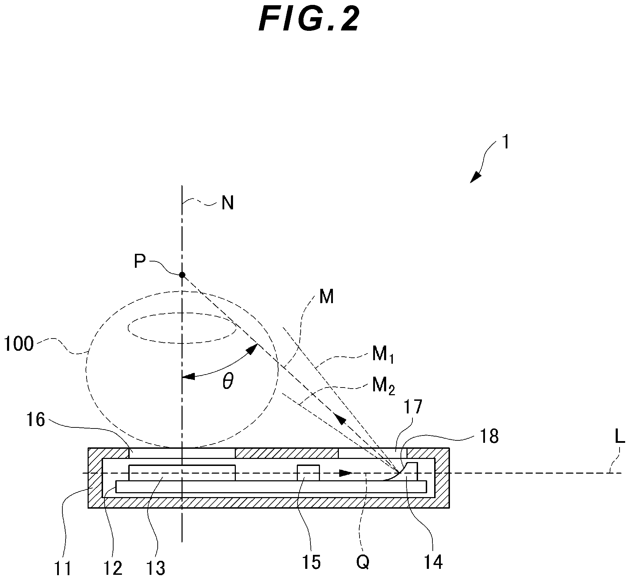

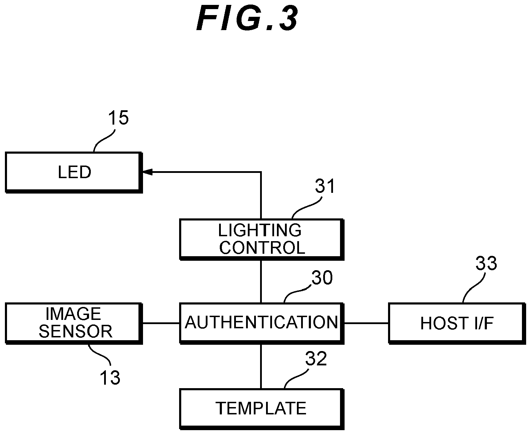

Fig. 1 is a plan view of a vein authentication module according to Embodiment 1 of the present invention. Fig. 2 is a cross-sectional view of the vein authentication module as taken along line II-II shown in Fig. 1. Fig. 3 is a block diagram of a processing circuit for the vein authentication module according to Embodiment 1 of the present invention to perform vein authentication. Incidentally, each of the above-mentioned drawings illustrates the thickness, size, enlargement and reduction ratios, and other details of each component; but for ease of comprehension, they are not to scale.

As shown in Fig. 1 and Fig. 2, a vein authentication module 1 according to Embodiment 1 includes: a housing 11; a circuit board 12 located at the inner bottom of the housing 11; an image sensor 13 located at one end of the circuit board 12; a reflecting mirror 14 located at the other end of the circuit board 12, which is opposite the position where the image sensor 13 is located; and near infrared light sources 15 located between the image sensor 13 and the reflecting mirror 14 on the circuit board 12.

The housing 11 is composed of a generally rectangular parallelopiped having an internal space, inside of which the circuit board 12, the image sensor 13, the reflecting mirror 14, and the near infrared light sources 15 are placed. An opening of size equal to that of the image sensor 13, in planar view, is formed in a top surface of the housing 11 corresponding to an area where the image sensor 13 is located; and an optical filter 16 is placed in this opening. On the other side of the top surface of the housing 11, which is opposite the area where the optical filter 16 is placed, an opening through which the light reflected by the reflecting mirror 14 described later passes is formed; and a lighting filter 17 is placed in this opening. This lighting filter 17 is composed of a near-infrared pass filter and serves to transmit the near infrared required and prevent invasion of foreign materials such as dust into the housing 11. Incidentally, a finger 100 which is an object of the vein authentication is placed right over the optical filter 16.

The circuit board 12 is a reference plane on which the image sensor 13, the reflecting mirror 14, and the near infrared light sources 15 are mounted; and is composed of a printed board in Embodiment 1. This circuit board 12 may be configured as one substrate as shown in Fig. 1 and Fig. 2 or, for example, may be divided into a plurality of substrates in consideration of, for example, an assembly convenience. An electric circuit shown in Fig. 3 is mounted on this circuit board 12. The details of this electric circuit will be explained later.

The image sensor 13 is of an area sensor type and has a light-receiving unit of the same size as that of a shoot range for veins (finger veins in Embodiment 1) which are authentication objects. Furthermore, the image sensor 13 has spectral characteristics with sufficient sensitivity and sufficient resolution for the near infrared light range to enable image shooting of the finger veins. This image sensor 13 is located so that the optical axis N of the image sensor 13 is placed along a direction perpendicular to the reference plane of the circuit board 12 (the surface on which the image sensor 13 is placed).

Furthermore, the image sensor 13 is configured so that, for example, an image sensor, an aperture grill, and a microlens array are stacked in the order listed above as seen from the circuit board 12 side. The top surface of the image sensor has a plurality of mutually independent openings and these openings constitute a light-receiving unit of a photoelectric converter, which serves to convert a light signal entering the openings into an electric signal. The aperture grill blocks the light other than the light parallel to the optical axis that passes through the openings of the image sensor and microlenses of the microlens array which are coaxially aligned. The microlens array has a plurality of microlenses with positive light-gathering power and these microlenses are coaxially aligned with the openings of the image sensor at positions corresponding to each other on a one-to-one basis.

Furthermore, the image sensor 13 may be configured so that, for example, the microlens array may be placed over a CMOS sensor. In this case, one microlens of the microlens array corresponds to one picture element of the CMOS sensor and the picture elements are arranged in a lattice pattern with the required resolution pitch.

The two near infrared light sources 15 are placed apart from each other with a distance between them and along the lengthwise direction of the finger 100 placed right over the optical filter 16 as shown in Fig. 1. For these near infrared light sources 15, infrared LEDs can be used and small-sized, horizontal-illumination-type and capable of surface mount are preferable. An example of these near infrared light sources 15 is SFH4655 near infrared LED manufactured by OSRAM. These horizontal-illumination-type near infrared light sources 15 are located so that they emit light towards the opposite direction to the image sensor 3 and the optical axis Q of that light is directed parallel to the reference plane of the circuit board 12 as shown in Fig. 1 and 2.

The reflecting mirror 14 reflects the light emitted from the near infrared light sources 15 towards the finger 100 placed right over the optical filter 16. A reflection surface 18 of this reflecting mirror 14 facing the near infrared light sources 15 is made of a material with high reflectance with respect to the near infrared light and is a curved surface. As the reflection surface 18 is configured as the curved surface, a radiation angle of the light emitted from the near infrared light sources 15 is narrowed after reflected at the reflection surface, so that the surface of the finger 100 will be irradiated with more light density. Therefore, lighting efficiency can be enhanced and the quality of images can be improved.

The near infrared light sources 15 and the reflecting mirror 14 are placed within a plane that is perpendicular to the optical axis N of the image sensor 13 and includes the image sensor 13. In Embodiment 1, the image sensor 13, the near infrared light sources 15, and the reflecting mirror 14 are placed on the reference plane of the circuit board 12, that is, the same plane. Furthermore, Embodiment 1 is designed so that the center of the height of the image sensor 13 (along the optical axis N direction), the optical axis Q of the near infrared light sources 15, and the center of the height of the reflecting mirror 14 are located on the same line L as shown in Fig. 2. Because of this configuration, the heights of the image sensor 13, the near infrared light sources 15, and the reflecting mirror 14 from the reference plane of the circuit board 12 can be minimized, thereby reduction in thickness is realized.

In Embodiment 1, the light reflected on the reflection surface 18 can be bent so that its optical axis M will intersect the optical axis N of the image sensor 13 at angle θ as shown in Fig. 2. The angle θ is an acute angle (angle less than 90 degrees) and the finger 100 placed right over the optical filter 16 will be irradiated with the light diagonally upwards. The angle θ needs to be determined so that the upside of the finger 100 will be irradiated with the light; and in order to take clearer images of the finger veins, an intersection point of the optical axis M and the surface of the finger 100, that is, a central position of light irradiation points should preferably be at a position with a long distance along the optical axis N direction from the top surface of the optical filter 16 (the height should be high). Furthermore, referring to Fig. 2, M₁ represents an upper limit of the range of the light which is reflected on this reflection surface 18 and whose radiant intensity is equal to or more than certain intensity; and M₂ represents a lower limit of the range of such light. An intersection point P of the optical axis N and the optical axis M is set according to, for example, an upper limit and lower limit of the thickness of the finger 100 placed right over the optical filter 16.

The vein authentication module 1 according to Embodiment 1 is configured as described above so that the light is emitted from the near infrared light sources 15 in a direction opposite to the image sensor 13 and the light emitted from the near infrared light sources 15 is reflected on the reflecting mirror 14 to form an acute angle with the optical axis N of the image sensor 13, thereby irradiating the finger 100 with that light. So, it is possible to prevent any unnecessary infrared light for the finger vein imaging. Therefore, it is possible to perform high-precision finger vein authentication.

The electric circuit mounted on the circuit board 12 is a processing circuit used by the vein authentication module 1 to perform the vein authentication and includes, as shown in Fig. 3, an authentication processing unit 30 for authenticating information obtained by the image sensor 13, a lighting control unit 31 for controlling the light used to irradiate the finger 100 whose image should be taken, a template unit 32 for storing the information obtained by the image sensor 13, and a host interface unit 33.

The authentication processing unit 30 processes a finger vein image taken by the image sensor 13 and generates a finger vein template. Then, at the time of registration, that finger vein template (hereinafter referred to as the "registered template") is stored in the template unit 32. On the other hand, at the time of matching, a finger vein template (hereinafter referred to the "input template") is generated by processing a finger vein image newly taken by the image sensor 13 and the registered template stored in the template unit 32 is read and compared with the input template. This comparison is performed by, for example, quantifying the difference between these templates and comparing it with a specified threshold value. This difference is called a mis-match rate or a mis-match number. If this mis-match rate is less than the specified threshold value, the authentication processing unit 30 determines that the registered template matches the input template (they must be templates of the same finger); and if the mis-match rate is equal to or more than the specified threshold value, the authentication processing unit 30 determines that the registered template does not match the input template (they must be templates of different fingers).

The lighting control unit 31 controls the illuminance (brightness) of the lighting necessary to take images of the finger 100 placed right over the optical filter 16 and controls the intensity of the near infrared light sources 15 according to, for example, the thickness of the finger 100. If the vein authentication module 1 does not have a thickness detection means for directly detecting the thickness of the finger 100, this lighting control unit 31 estimates brightness from a shot image and maintains certain brightness of the shot image by feedback control. On the other hand, if the vein authentication module 1 has the thickness detection means, the lighting control unit 31 performs feedback control based on information detected by the thickness detection means to maintain certain brightness of the shot image.

The host interface unit 33 communicates with a host unit (not shown in the drawing) of the vein authentication module 1 and serves to perform device authentication with the host unit and report processing results of the authentication processing unit 30 to the host unit. Examples of a means of communication between the host interface unit 33 and the host unit include a USB (Universal Serial Bus) which is used for equipment such as personal computers. Furthermore, this communication means is normally encrypted because of confidentiality and for the purpose of, for example, prevention of data falsification.

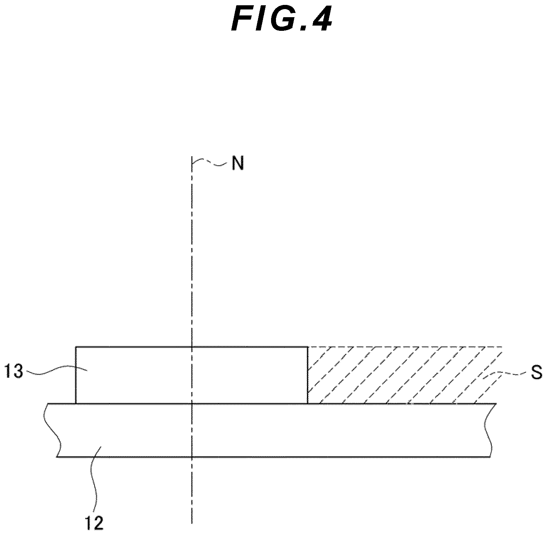

Embodiment 1 has described a case where the image sensor 13, the near infrared light sources 15, and the reflecting mirror 14 are placed on the same plane. However, the invention is not limited to this example; and regarding the positioning of the image sensor 13, the near infrared light sources 15, and the reflecting mirror 14, it is only necessary for the near infrared light sources 15 and the reflecting mirror 14 to be placed in the region S (area indicated with hatching in Fig. 4) that is perpendicular to the optical axis N of the image sensor 13 and includes the image sensor 13 as shown in Fig. 4.

Moreover, Embodiment 1 has described a case where the lighting filter 17 is placed in the opening formed in the housing 11. However, the invention is not limited to this example and the lighting filter 17 does not have to be always placed in the opening, depending on, for example, the usage environment of the vein authentication module 1, and the vein authentication module 1 may be used, leaving the opening in an open state.

Furthermore, Embodiment 1 has described the case where the two near infrared light sources 15 are placed apart from each other with a distance between them and along the lengthwise direction of the finger 100 placed right over the optical filter 16. However, the invention is not limited to this example and the number of the near infrared light source(s) 15 to be set may be determined to be an arbitrary number if appropriate lighting for the finger 100 can be provided in consideration of, for example, irradiation distribution over the surface of the finger 100. Furthermore, a plurality of reflecting mirrors 14 may be placed corresponding to the respective near infrared light sources 15.

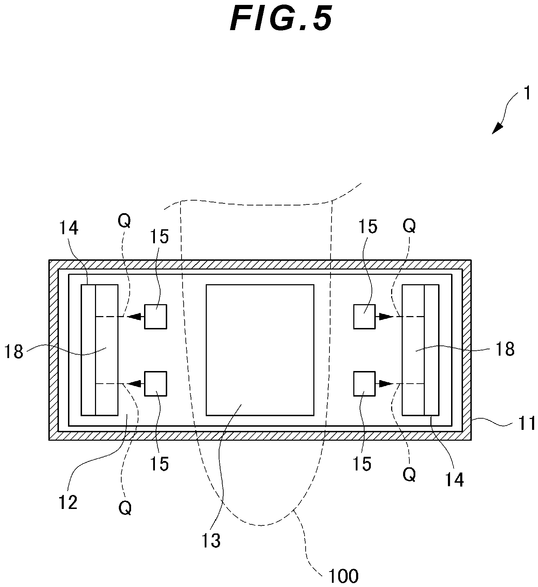

Furthermore, with the vein authentication module 1 according to Embodiment 1, the reflecting mirror 14 may be located at both ends of the vein authentication module 1 so that the image sensor 13 would be placed between them as shown in Fig. 5; and the near infrared light sources 15 may be located between the image sensor 13 and the reflecting mirror 14 on the right side in Fig. 5 and between the image sensor 13 and the reflecting mirror 14 on the left side in Fig. 5, respectively. A symmetric finger vein image can be obtained by locating the near infrared light sources 15 and the reflecting mirrors 14 at symmetric positions relative to the image sensor 13. Incidentally, also in the case of this configuration, the near infrared light sources 15 and the reflecting mirrors 14 are placed within the plane that is perpendicular to the optical axis N of the image sensor 13 and includes the image sensor 13.

(Embodiment 2)
Next, a vein authentication module according to Embodiment 2 of the present invention will be explained with reference to the relevant drawings. Incidentally, the same reference numerals as those in Embodiment 1 are assigned to elements of the vein authentication module according to Embodiment 2 the same as those of the vein authentication module explained in Embodiment 1 and any detailed explanation about them have been omitted.

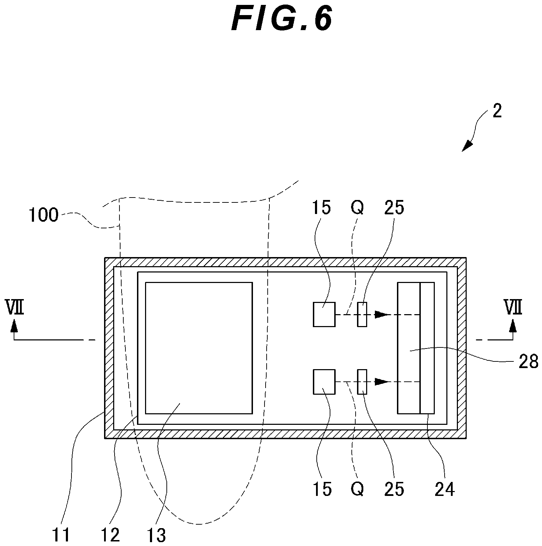

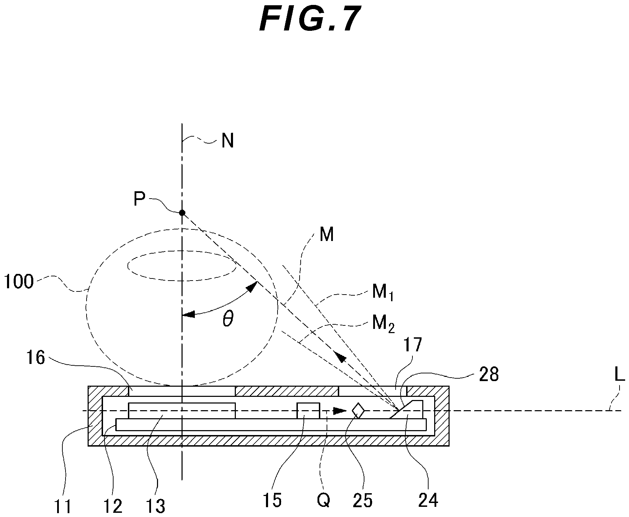

Fig. 6 is a plan view of the vein authentication module according to Embodiment 2 of the present invention. Fig. 7 is a cross-sectional view of the vein authentication module as taken along line VII-VII shown in Fig. 6. Incidentally, each of the above-mentioned drawings illustrates the thickness, size, enlargement and reduction ratios, and other details of each component; but for ease of comprehension, they are not to scale.

As shown in Fig. 6 and Fig. 7, the main differences between the vein authentication module 2 according to Embodiment 2 and the vein authentication module 1 according to Embodiment 1 are the configuration of a reflecting mirror 24 and placement of lenses 25 between the near infrared light sources 15 and the reflecting mirror 24.

The reflecting mirror 24 is located, in the same manner as the reflecting mirror 14, at one end of the circuit board 12 opposite the position where the image sensor 13 is located. The reflection surface 28 of this reflecting mirror 24 facing the near infrared light sources 15 is made of a material of high reflectance with respect to the near infrared light and is a flat surface.

The lens 25 is designed to weakly collect the light emitted from the near infrared light source 15. The light emitted from the near infrared light source 15 normally radiates and spreads to a certain degree; and the light emitting from the lenses 25 can be turned into generally near-parallel light by weakly collecting the light emitted from the near infrared light sources 15. Therefore, the finger 100 placed right over the optical filter 16 can be irradiated with a large amount of light by having the flat reflection surface 28 of the reflecting mirror 24 reflect this generally near-parallel light. As a result, it is possible to enhance the lighting efficiency and improve the quality of images to be taken. Furthermore, in the case of this configuration, the reflection surface 28 of the reflecting mirror 24 is a flat surface, so that an inexpensive reflecting mirror 24 can be used and the mounting precision of the reflecting mirror 24 can be eased.

The near infrared light sources 15, the reflecting mirror 24, and the lens 25 are placed on the reference plane of the circuit board 12, that is, the same plane, in the same manner as in Embodiment 1; and are located as shown in Fig. 7 so that the center of the height of the image sensor 13 (along the optical axis N direction), the optical axis Q of the near infrared light sources 15, and the center of the height of the lenses 25 and the reflecting mirror 24 are positioned on the same line L. Because of this configuration, the height of the image sensor 13, the near infrared light sources 15, the lenses 25, and the reflecting mirror 24 from the reference plane of the circuit board 12 can be minimized, thereby reduction in thickness is realized.

Incidentally, regarding the vein authentication module 2 according to Embodiment 2 like the vein authentication module 1 show in Fig. 5, the reflecting mirror 24 may be located at both ends of the vein authentication module 2 so that the image sensor 13 would be placed between them; and the near infrared light sources 15 and the lenses 25 may be located between the image sensor 13 and the reflecting mirror 24 on the right side and between the image sensor 13 and the reflecting mirror 24 on the left side, respectively. A symmetric finger vein image can be obtained by locating the near infrared light sources 15, the lenses 25, and the reflecting mirrors 24 at symmetric positions relative to the image sensor 13. Incidentally, also in the case of this configuration, the near infrared light sources 15, the lenses 25, and the reflecting mirrors 24 are placed within the plane that is perpendicular to the optical axis N of the image sensor 13 and includes the image sensor 13.

Furthermore, Embodiments 1 and 2 have described the cases where the finger veins are authenticated by using the finger 100 as the authentication object. However, the present invention is not limited to this example and the vein authentication module according to the present invention can be applied to any area that can be authenticated by using the veins, such as a palm, as the authentication object besides the finger. In this case, the shape and other elements of the vein authentication module may be changed as necessary according to the authentication object.

### [Description of Reference Numerals]

1, 2 vein authentication module; 11 housing; 12 circuit board; 13 image sensor; 14, 24 reflecting mirror; 15 near infrared light source; 18, 28 reflection surface; and 25 lens

## Claims

1. A vein authentication module comprising:
a light source for irradiating an authentication object with light;
an image sensor for taking an image of a vein pattern of the authentication object;
a reflecting mirror for reflecting the light emitted from the light source and making the reflected light reach the authentication object; and
a housing containing the light source, the image sensor, and the reflecting mirror;
wherein the image sensor is of an area sensor type, and
the light source and the reflecting mirror are located within a plane perpendicular to an optical axis of the image sensor and including the image sensor.

2. The vein authentication module according to claim 1, wherein the image sensor, the light source, and the reflecting mirror are located on the same plane.

3. The vein authentication module according to claim 1, wherein the optical axis of the light emitting from the light source is perpendicular to the optical axis of the image sensor.

4. The vein authentication module according to claim 1, wherein at least part of a reflection surface of the reflecting mirror is composed of a curved surface.

5. The vein authentication module according to claim 1, wherein the light source is located between the image sensor and the reflecting mirror.

6. The vein authentication module according to claim 1, wherein a lens is located between the light source and the reflecting mirror and the light collected by the lens is made to reach the reflecting mirror.

7. The vein authentication module according to claim 6, wherein the lens is located within the plane including the image sensor.
